(19) Europäisches Patentamt
European Patent Office
Office européen des brevets

(11) **EP 2 667 433 A1**

(12) **EUROPEAN PATENT APPLICATION**
published in accordance with Art. 153(4) EPC

(43) Date of publication:
**27.11.2013 Bulletin 2013/48**

(51) Int Cl.:
*H01M 4/505* (2010.01)     *H01M 4/131* (2010.01)
*H01M 4/36* (2006.01)     *H01M 4/525* (2010.01)
*H01M 10/052* (2010.01)

(21) Application number: **12736869.4**

(22) Date of filing: **23.01.2012**

(86) International application number:
**PCT/JP2012/051361**

(87) International publication number:
**WO 2012/099265 (26.07.2012 Gazette 2012/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **21.01.2011   JP 2011011262**

(71) Applicant: **Sanyo Electric Co., Ltd.
Osaka 570-8677 (JP)**

(72) Inventors:
• **HASEGAWA, Kazuhiro
Moriguchi-shi
Osaka 570-8677 (JP)**
• **OGASAWARA, Takeshi
Moriguchi-shi
Osaka 570-8677 (JP)**

• **JITO, Daizo
Moriguchi-shi
Osaka 570-8677 (JP)**
• **NOMURA, Shun
Moriguchi-shi
Osaka 570-8677 (JP)**
• **FUJIMOTO, Hiroyuki
Moriguchi-shi
Osaka 570-8677 (JP)**

(74) Representative: **Glawe, Delfs, Moll
Patent- und Rechtsanwälte
Postfach 26 01 62
80058 München (DE)**

(54) **POSITIVE ELECTRODE ACTIVE MATERIAL FOR NONAQUEOUS ELECTROLYTE SECONDARY BATTERY, POSITIVE ELECTRODE FOR NONAQUEOUS ELECTROLYTE SECONDARY BATTERY USING SAID POSITIVE ELECTRODE ACTIVE MATERIAL, AND NONAQUEOUS ELECTROLYTE SECONDARY BATTERY USING SAID POSITIVE ELECTRODE**

(57)     The present invention provides a positive electrode active material for a nonaqueous electrolyte secondary battery which is capable of improving an initial discharge capacity and suppressing a decrease in discharge voltage and a decrease in battery capacity even in repeated charge-discharge cycles, a positive electrode using the active material, and a nonaqueous electrolyte secondary battery using the positive electrode. The positive electrode active material includes a particle 21 of a lithium transition metal composite oxide containing lithium, nickel, and manganese and having a layered structure; and a particle 22 of a compound of at least one element adhered to a portion of the surface of the particle 21 and selected from the rare earth elements with atomic numbers 59 to 71.

Figure 3

**Description**

Technical Field

The present invention relates to a positive electrode active material for a nonaqueous electrolyte secondary battery, a positive electrode for a nonaqueous electrolyte secondary battery using the positive electrode active material, and a nonaqueous electrolyte secondary battery using the positive electrode.

Background Art

In recent years, reductions in size and weight of mobile information terminals such as a cellular phone, a notebook-size personal computer, PDA, and the like have been rapidly advanced, and batteries used as driving power supplies have been required to have higher capacity. Lithium ion batteries which are charged and discharged by movement of lithium ions between positive and negative electrodes have a high energy density and high capacity, and are thus widely used as driving power supplies for the above-described mobile information terminals.
The mobile information terminals are liable to be further increased in power consumption with enhancement of functions such as a video replay function and a game function, and are strongly demanded to have higher capacity. A method for increasing the capacity of the nonaqueous electrolyte batteries is for example, a method of increasing the capacity of an active material, a method of increasing the amount of an active material filling per unit volume, or a method of increasing the charge voltage of a battery. However, an increase in charge voltage of a battery easily causes a reaction between a positive electrode active material and a nonaqueous electrolyte.
Accordingly, it is described that for example, when a charge voltage is increased, a reaction between a positive electrode active material and a nonaqueous electrolyte can be suppressed by coating a surface of a positive electrode (refer to, for example, Patent Literature 1 below).

Citation List

Patent Literature

PTL 1: WO2010/004973A1

Summary of Invention

Technical Problem

Patent Literature 1 mainly aims at suppressing a reaction between a positive electrode active material and a nonaqueous electrolyte by using lithium cobalt oxide as a main active material when a charge voltage is increased. However, lithium cobalt oxide has a problem of high cost because cobalt is a rare metal. Therefore, recently, the cost is suppressed to be low by using a lithium-cobalt-nickel-manganese composite oxide in place of lithium cobalt oxide. However, simple use of a nickel-manganese-lithium composite oxide is advantageous in view of cost, but repeated charge-discharge cycles cause fracture of a surface crystal structure of a positive electrode active material and thus increases interface reaction resistance during lithium insertion and desertion, thereby causing the problem of decreasing an operating voltage during discharge and decreasing a discharge capacity.

Solution to Problem

A positive electrode active material of the present invention includes a lithium transition metal composite oxide containing lithium, nickel, and manganese and having a layered structure, and an oxyhydroxide of at least one element selected from the rare earth elements with atomic numbers 59 to 71 and/or a hydroxide of at least one element selected from the rare earth elements with atomic numbers 59 to 71, the oxyhydroxide and/or the hydroxide being adhered to a portion of a surface of the lithium transition metal composite oxide.

Advantageous Effects of Invention

The present invention exhibits the excellent effect of being capable of suppressing a decrease in operating voltage during discharge and a decrease in discharge capacity even in repeated charge-discharge cycles.

Brief Description of Drawings

[Figure. 1] Figure 1 is a front view of a nonaqueous electrolyte secondary battery according to an embodiment of the present invention.
[Figure 2] Figure 2 is a sectional view taken along arrow line A-A in Figure 1.
[Figure 3] Figure 3 is an explanatory view showing a surface condition of lithium nickel-cobalt-manganese oxide of the present invention.
[Figure 4] Figure 4 is an explanatory view showing a surface condition different from a surface condition of lithium nickel-cobalt-manganese oxide of the present invention.
[Figure 5] Figure 5 is an explanatory view showing a three-electrode beaker cell.

Description of Embodiments

A positive electrode active material of the present invention includes a lithium transition metal composite oxide which contains Li, Ni, and Mn and has a layered structure, and an oxyhydroxide of at least one element selected from the rare earth elements with atomic numbers 59 to 71 and/or a hydroxide of at least one element selected from the rare earth elements with atomic numbers 59 to 71 (may be simply referred to as a "rare earth element compound" hereinafter), the oxyhydroxide and/or the hydroxide being adhered to a portion of a surface of the lithium transition metal composite oxide.
As the lithium transition metal composite oxide containing Li, Ni, and Mn and having a layered structure, lithium nickel-manganese oxide or lithium nickel-cobalt-manganese oxide can be used, but a ternary system of lithium nickel-cobalt-manganese oxide is particularly preferred. As the rare earth elements with atomic numbers 59 to 71, praseodymium (atomic number 59), neodymium (atomic number 60), and erbium (atomic number 68) are particularly preferably used.

In the above-described configuration, a decrease in discharge voltage and a decrease in discharge capacity can be suppressed in repeated charge-discharge cycles. Although a mechanism of this is unknown, crystal structure stability of a surface of the positive electrode active material can be enhanced by adhering a rear earth element compound to a portion of a surface of the lithium transition metal composite oxide containing Li, Ni, and Mn and having a layered structure. Therefore, a conceivable cause is that a change in the crystal structure of the lithium transition metal composite oxide can be suppressed during a charge-discharge cycle, and thus an increase in interface reaction resistance during lithium insertion and desertion can be suppressed.

A hydroxide and oxyhydroxide of cerium which is a rare earth element with atomic number 58 are unstable and converted to oxides. Therefore, a decrease in discharge voltage and a decrease in discharge capacity cannot be sufficiently suppressed in repeated charge-discharge cycles.

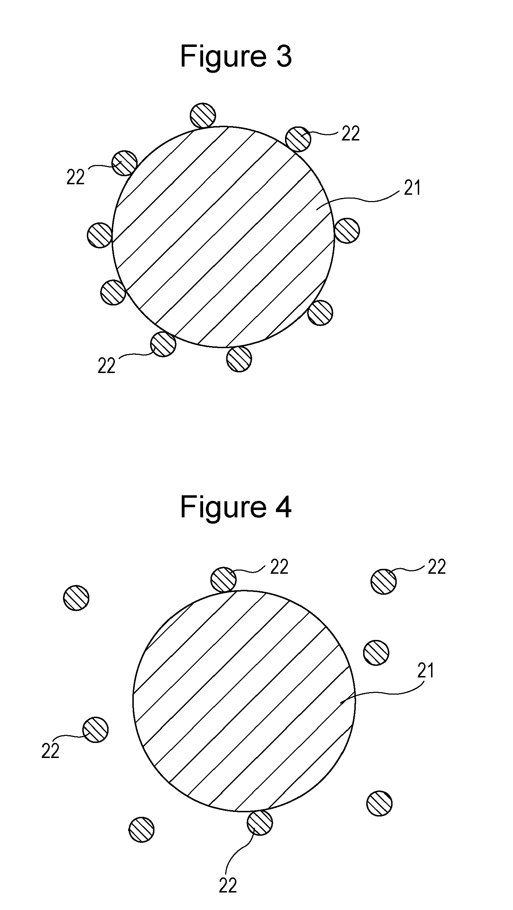

A state in which the rare earth element compound is adhered to a portion of a surface of the lithium transition metal composite oxide represents a state in which as shown in Figure 3, particles 22 of hydroxyl and/or oxyhydroxide of a rare earth element, such as praseodymium, neodymium, or erbium, are adhered to the surface of a particle 21 of the lithium transition metal composite oxide. That is, the state does not include a state in which the particles 22 of a rare earth element compound are simply mixed with the particle 21 of the lithium transition metal composite oxide and the particles 22 of a rare earth element compound happen to be partially in contact with the particle 21 of the lithium transition metal composite oxide.

The lithium transition metal composite oxide containing Li, Ni, and Mn and having a layered structure preferably has a composition formula represented by the chemical formula, $Li_{1+x}(Ni_aMn_bCo_c)O_2$ ($x + a + b + c = 1$, $0 < x \leq 0.1$, $0 \leq c < 0.4$, $0.7 \leq a/b \leq 8$).
When x exceeds 0.1, the ratio of the transition metal which causes oxidation-reduction reaction during charge and discharge is decreased, thereby decreasing the charge-discharge capacity. Therefore, x is preferably 0.1 or less. When a/b exceeds 8, the Ni composition ratio is increased, and thermal stability is degraded. On the other hand, when a/b is less than 0.7, the Mn composition ratio is increased, and thus an impurity phase is produced, resulting in a decrease in capacity. Therefore, the Ni/Mn composition ratio is preferably $0.7 \leq a/b \leq 8$. The reason for $0 \leq c < 0.4$ is that with c of 0.4 or more, the content of cobalt as a rare metal is excessively increased, causing disadvantage in view of cost. Considering characteristic balance of a battery, lithium nickel-cobalt-manganese oxide containing the three components, nickel, cobalt, and manganese, is most preferred, and thus $0 < c < 0.4$ is more preferred.

The amount of the rare earth element compound adhered is preferably 0.005% by mass or more and 0.8% by mass or less, particularly preferably 0.01% by mass or more and 0.5% by mass or less, in terms of rare earth element relative to the lithium transition metal composite oxide.
The amount of adhering of less than 0.005% by mass exhibits the small effect of improving cycling characteristics, while the amount of adhering exceeding 0.8% by mass decreases a discharge rate characteristic.

The average particle diameter of the rare earth element compound is preferably 100 nm or less. When the average particle diameter of the rare earth element compound exceeds 100 nm, adhering sites may be localized in a portion, thereby failing to sufficiently exhibit the above-described effect.

The lower limit of the average particle diameter of the rare earth element compound is preferably 0.1 nm or more, particularly preferably 1 nm or more. When the average particle diameter of the rare earth element compound is less than 0.1 nm, the surface of the positive electrode active material is excessively coated even with a small amount of the compound because of the excessively small size of the compound.

The rare earth element compound is preferably at least one selected from the group consisting of praseodymium hydroxide, neodymium hydroxide, erbium hydroxide, neodymium oxyhydroxide, and erbium oxyhydroxide. By using these rare earth element compounds, deterioration in the surface of the lithium transition metal composite oxide is further suppressed, and a decrease in operating voltage is further suppressed even in repeated charge-discharge cycles.

The initial charge-discharge efficiency of a negative electrode is preferably higher than that of a positive electrode. In this configuration, the initial charge-discharge efficiency of a battery is determined by the initial charge-discharge efficiency of the positive electrode, and thus the initial charge-discharge efficiency of a battery can be improved.

(Other matters)

(1) Examples of a method for adhering the rare earth element compound to a portion of the surface of the lithium transition metal composite oxide include a method of mixing a solution in which the rare earth element compound is dissolved with a solution in which the lithium transition metal composite oxide is dispersed, a method of spraying a solution containing the rare earth element compound while mixing a powder of the lithium transition metal composite oxide, and the like.

By using the method, the rare earth element hydroxide can be adhered to a portion of the surface of the lithium transition metal composite oxide. Further, the rare earth element hydroxide adhered to a portion of the surface is converted to a rare earth element oxyhydroxide by heat treatment of the lithium transition metal composite oxide at a predetermined temperature.

Examples of the rare earth element compound to be dissolved in a solution used for adhering the rare earth element hydroxide include rare earth element acetates, rare earth element nitrates, rare earth element sulfates, rare earth element oxides, rare earth element chlorides, and the like. The rare earth element compound is required to be a rare earth element hydroxide or oxyhydroxide. That is, a rare earth element oxide is not included. This is because as described below.

The rare earth element hydroxide adhered to the surface is converted to an oxyhydroxide or oxide by heat treatment. However, a temperature at which the rare earth element hydroxide or rare earth element oxyhydroxide is stably converted to an oxide is generally 500°C or more, but heat treatment at such a temperature causes the rare earth element compound adhered to the surface to be partially diffused into the positive electrode active material. This may result in deterioration in the effect of suppressing a change in crystal structure of the surface of the positive electrode active material.

An example of the lithium transition metal composite oxide is lithium nickel-cobalt-manganese oxide, and the lithium nickel-cobalt-manganese oxide having a known composition having a molar ratio of nickel, cobalt, and manganese of 1:1:1, 5:2:3, 5:3:2, 6:2:2, 7:1:2, 7:2:1, 8:1:1, or the like can be used. In order to increase the positive electrode capacity, the ratio of nickel is particularly preferably higher than those of cobalt and manganese.

(2) A solvent of a nonaqueous electrolyte used in the present invention is not limited, and a solvent generally used for nonaqueous electrolyte secondary batteries can be used. Examples thereof include cyclic carbonates such as ethylene carbonate, propylene carbonate, butylene carbonate, vinylene carbonate, and the like; linear carbonates such as dimethyl carbonate, methylethyl carbonate, diethyl carbonate, and the like; ester-containing compounds such as methyl acetate, ethyl acetate, propyl acetate, methyl propionate, ethyl propionate, $\gamma$-butyrolactone, and the like; sulfone group-containing compounds such as propanesultone and the like; ether-containing compounds such as 1,2-dimethoxyethane, 1,2-diethoxyethane, tetrahydrofuran, 1,2-dioxane, 1,4-dioxane, 2-methyltetrahydrofuran, and the like; nitrile-containing compounds such as butyronitrile, valeronitrile, n-heptanenitrile, succinonitrile, glutarnitrile, adiponitrile, pimelonitrile, 1,2,3-propanetricarbonitrile, 1,3,5-pentanetricarbonitrile, and the like; amide-containing compounds such as dimethylformamide and the like. In particular, these solvents each partially substituted by F for H can be preferably used.

These solvents can be used alone or in combination of two or more, and in particular, a solvent containing a combination of a cyclic carbonate and a linear carbonate, and a solvent further containing a small amount of nitrile-containing compound or ether-containing compound in combination with a cyclic carbonate and a linear carbonate are preferred.

On the other hand, a solute which has been used can be used as a solute of a nonaqueous electrolyte, and examples thereof include $LiPF_6$, $LiBF_4$, $LiN(SO_2CF_3)_2$, $LiN(SO_2C_2F_5)_2$, $LiPF_{6-x}(C_nF_{2n-1})_x$ (wherein $1 < x < 6$, N = 1 or 2), and the like. These may be used alone or as a mixture of two or more. The concentration of the solute is not particularly limited but is preferably 0.8 to 1.8 mol per liter of the electrolyte.

(3) A negative electrode active material which has been used can be used as the negative electrode active material in the present invention. In particular, a lithium-absorbable and desorbable carbon material, a metal capable of forming an alloy with lithium or an alloy and/or alloy compound containing the metal, and a mixture thereof can be used. Examples of the carbon material which can be used include graphites such as natural graphite, non-graphitizable carbon, artificial graphite, and the like; cokes, and the like. An alloy compound containing at least one metal capable of forming an alloy with lithium can be used. In particular, silicon and tin are preferred as an element capable of forming an alloy with lithium, and silicon oxide, tin oxide, and the like, which contain oxygen bonded to the elements, can also be used. Also, a mixture of the carbon material and a silicon or tin compound can be used.

When the negative electrode active material contains a graphite material, a ratio of the graphite material is 80% by mass or more relative to the total amount of the negative electrode active material.
This because when the ratio of the graphite material is 80% by mass or more relative to the total amount of the negative electrode active material, the initial charge-discharge efficiency of the negative electrode is about 90% or more even by mixing with a negative electrode of Si, a Si alloy, tin, or the like which may have a lower initial charge-discharge efficiency than graphite materials, and thus the initial charge-discharge efficiency of the negative electrode can be prevented from becoming lower than that of  the positive electrode.
Besides the above-described materials, a material having a higher charge-discharge potential versus metallic lithium, such as lithium titanate, than that of carbon materials can be used as a negative electrode material.

(4) A layer composed of an inorganic filler, which has been used, can be formed at an interface between the positive electrode and a separator or an interface between the negative electrode and a separator. As the filler, titanium, aluminum, silicon, magnesium, and the like, which have been used, can be used alone, used as an oxide or phosphoric acid compound containing two or more of these elements, or used after being surface-treated with a hydroxide or the like.

Usable examples of a method for forming the filler layer include a forming method of directly applying a filler-containing slurry to the positive electrode, the negative electrode, or the separator, a method of bonding a sheet made of the filler to the positive electrode, the negative electrode, or the separator, and the like.

(5) A separator which has been used can be used as the separator in the present invention. Specifically, not only a separator composed of polyethylene but also a separator including a polypropylene layer formed on a surface of a polyethylene layer and a polyethylene separator including a resin such as an aramid resin or the like applied to a surface thereof may be used.

(6) Although experimental data about hydroxides or oxyhydroxides of the three rare earth elements including praseodymium, neodymium, and erbium used as rare earth element hydroxides or oxyhydroxide are described in examples below, the rare earth elements are not limited to these, and the same effects can be considered to be achieved with samarium, europium, gadolinium, terbium, dysprosium, holmium, thulium, ytterbium, and lutetium. Hydroxides or oxyhydroxides of these rare earth elements can be considered to enhance stability of a crystal structure and suppress an increase in interface reaction resistance during lithium insertion and desertion.

EXAMPLES

A positive electrode active material for a nonaqueous electrolyte secondary battery, a positive electrode using the positive electrode active material, and a battery using the positive electrode according to the present invention are not limited to those described in examples below, and appropriate modification can be made without changing the gist of the present invention.

[First Example]

In this example, the effect of improving cycling characteristics was examined by changing the type of a compound adhered to a portion of a surface of lithium nickel-cobalt-manganese oxide.

(EXAMPLE 1)

[Preparation of positive electrode active material]

$Li_2CO_3$ and a coprecipitated hydroxide represented by $Ni_{1/3}Co_{1/3}Mn_{1/3}(OH)_2$ were mixed using a Ishikawa-type kneading mortar so that a molar ratio of Li to the entire transition metals was 1.08:1. Next, the resultant mixture was heat-treated at 950°C for 20 hours in an air atmosphere and then ground to produce lithium nickel-cobalt-manganese oxide represented by $Li_{1.04}Ni_{0.32}Co_{0.32}Mn_{0.32}O_2$ and having an average secondary particle diameter of about 12 $\mu$m.

[Formation of positive electrode]

First, 1000 g of particles of the lithium nickel-cobalt-manganese oxide was prepared, and the particles were added to 3.0 L of pure water and stirred to prepare a suspension in which the lithium nickel-cobalt-manganese oxide wad dispersed. Next, a solution prepared by dissolving 1.05 g of erbium nitrate pentahydrate [$Er(NO_3)_3 \cdot 5H_2O$] in 200 mL of pure water was added to the suspension. At this time, a 10 mass % aqueous solution of nitric acid or a 10 mass % aqueous solution of sodium hydroxide was appropriately added for adjusting the solution in which the lithium nickel-cobalt-manganese oxide was dispersed to pH 9.

Then, after the addition of the erbium nitrate pentahydrate solution was completed, the resultant mixture was filtered by suction and the residue was further washed with water. The resultant powder was dried at 120°C to yield a product in which erbium hydroxide was adhered to a portion of a surface of the lithium nickel-cobalt-manganese oxide. Then, the resultant powder was heat-treated in air at 300°C for 5 hours. The heat treatment at 300°C converts the entire or most part of erbium hydroxide into erbium oxyhydroxide, thereby causing a state in which erbium oxyhydroxide is adhered to a portion of a surface of the lithium nickel-cobalt-manganese oxide. However, erbium hydroxide may partially remain unchanged, and thus erbium hydroxide may be adhered to a portion of a surface of the lithium nickel-cobalt-manganese oxide. The erbium oxyhydroxide and erbium hydroxide may be referred to, as a general term, as a "erbium compound" hereinafter.

Observation of the resultant positive electrode active material with a scanning electron microscope (SEM) confirmed that the erbium compound having an average particle diameter of 100 nm or less is adhered to a portion of the surface of the lithium nickel-cobalt-manganese oxide. In addition, ICP measurement of the amount of the erbium compound adhered showed a value of 0.06% by mass in terms of erbium element relative to the lithium nickel-cobalt-manganese oxide. Further, measurement of a BET value of the positive electrode active material showed a value of 0.60 $m^2$/g.

Then, a carbon powder as a positive electrode conductive agent, polyvinylidene fluoride (PVdF) as a binder, and N-methyl-2-pyrrolidone as a dispersant were added to the positive electrode active material prepared as described above so that the mass ratio of the positive electrode active material, the positive electrode conductive agent, and the binder was 95:2.5:2.5 and then the resultant mixture was kneaded to prepare positive electrode slurry. Finally, the positive electrode slurry was applied to both surfaces of a positive-electrode current collector composed of an aluminum foil, dried, and then rolled with a rolling mill, and further a positive-electrode current collector tab was attached, producing a positive electrode.

[Formation of negative electrode]

Artificial graphite serving as a negative electrode active material and SBR (styrene-butadiene rubber) serving as a binder were added to an aqueous solution prepared by dissolving CMC (carboxymethyl cellulose sodium) as a thickener in water so that the mass ratio of the negative electrode active material, the binder, and the thickener was 98:1:1, and then the resultant mixture was kneaded to prepare a negative electrode slurry. Next, the negative electrode slurry was uniformly applied to both surfaces of a negative-electrode current collector composed of a copper foil, dried, and then rolled with a rolling mill, and further a negative-electrode current collector tab was attached, producing a negative electrode.

[Preparation of nonaqueous electrolyte]

Lithium hexafluorophosphate (LiPF$_6$) was dissolved at a concentration of 1.0 mol/l in a mixed solvent prepared by mixing ethylene carbonate (EC), ethylmethyl carbonate (EMC), and diethyl carbonate (DEC) at a volume ratio of 3: 6:1, preparing a nonaqueous electrolyte.

[Formation of battery]

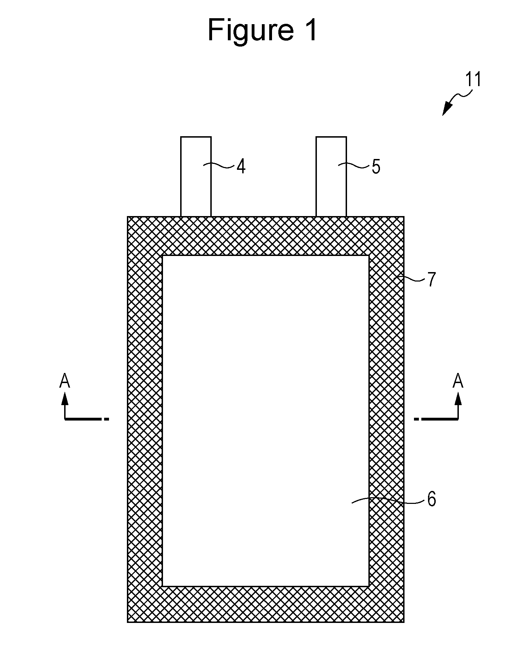

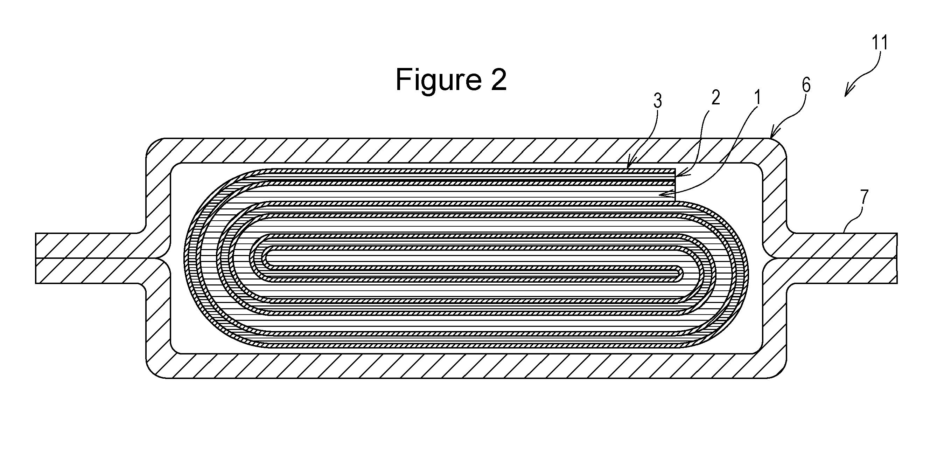

The positive electrode and the negative electrode formed as described above were coiled so that the electrodes faced each other with a separator provided therebetween, thereby forming a coiled body, and the coiled body was sealed in an aluminum laminate together with the electrolyte in a glow box in an argon atmosphere to form a nonaqueous electrolyte secondary battery having a thickness of 3.6 mm, a width of 3.5 cm, and a length of 6.2 cm. When the secondary battery was charged to 4.20 V and discharged to 2.75 V, a discharge capacity was 800 mAh.
As shown in Figures 1 and 2, the nonaqueous electrolyte secondary battery 11 has a specific structure in which a positive electrode 1 and a negative electrode 2 are disposed to face each other with a separator 3 therebetween, and a flat-shape electrode body including the positive and negative electrodes 1 and 2 and the separator 3 is impregnated with the electrolyte. The positive and negative electrodes 1 and 2 are connected to a positive-electrode current collector tab 4 and a negative-electrode current collector tab 5, respectively, thereby forming a structure chargeable and dischargeable as a secondary battery. The electrode body is disposed in a receiving space of an aluminum laminate outer case 6 including an opening 7 with a heat-sealed periphery.
The thus-formed battery is referred to as "battery A1" hereinafter.

(EXAMPLE 2)

A battery was formed by the same method as in Example 1 except that the amount of erbium compound adhered was 0.20% by mass in terms of erbium element relative to lithium nickel-cobalt-manganese oxide. Measurement of a BET value of the resultant positive electrode active material showed a value of 0.63 m$^2$/g.
The thus-formed battery is referred to as "battery A2" hereinafter.

(EXAMPLE 3)

A battery was formed by the same method as in Example 1 except that a positive electrode active material produced by adhering a neodymium compound in place of the erbium compound to a portion of a surface of lithium nickel-cobalt-manganese oxide was used. The positive electrode active material was produced by the same method as in Example 1 except that neodymium nitrate hexahydrate was used in place of erbium nitrate pentahydrate in order to adhered to a rare earth element compound to a portion of a surface of lithium nickel-cobalt-manganese oxide.
ICP measurement of the amount of the neodymium compound adhered showed a value of 0.06% by mass in terms of neodymium element relative to lithium nickel-cobalt-manganese oxide. In addition, measurement of a BET value of the resultant positive electrode active material showed a value of 0.64 m$^2$/g.
The thus-formed battery is referred to as "battery A3" hereinafter.

(EXAMPLE 4)

A battery was formed by the same method as in Example 1 except that a positive electrode active material produced by adhering a praseodymium compound in place of the erbium compound to a portion of a surface of lithium nickel-cobalt-manganese oxide was used. The positive electrode active material was produced by the same method as in Example 1 except that praseodymium nitrate hexahydrate was used in place of erbium nitrate pentahydrate in order to adhered to a rare earth element compound to a portion of a surface of lithium nickel-cobalt-manganese oxide.
ICP measurement of the amount of the praseodymium compound adhered showed a value of 0.06% by mass in terms of praseodymium element relative to lithium nickel-cobalt-manganese oxide. In addition, measurement of a BET value of the resultant positive electrode active material showed a value of 0.61 m$^2$/g.
The thus-formed battery is referred to as "battery A4" hereinafter.

(COMPARATIVE EXAMPLE 1)

A battery was formed by the same method as in Example 1 except that lithium nickel-cobalt-manganese oxide without an erbium compound adhered to a portion of a surface thereof was used. Measurement of a BET value of the resultant positive electrode active material showed a value of 0.65 m$^2$/g.
The thus-formed battery is referred to as "battery Z1" hereinafter.

(COMPARATIVE EXAMPLE 2)

A battery was formed by the same method as in Example 1 except that lithium nickel-cobalt-manganese oxide with a cerium compound adhered to a portion of a surface thereof was used.
As a result of thermal mass spectrometric measurement of cerium hydroxide represented by the chemical formula $CeO_2 \cdot 2H_2O$ at a heating rate of 5 °C/min, cerium hydroxide was decomposed to $CeO_2 \cdot 0.5H_2O$ at 110°C or less and could not be stably present as cerium hydroxide, and decomposed to $CeO_2$ at 280°C.
Therefore, it is considered that the cerium compound adhered to a surface of the positive electrode active material is not in a state of cerium hydroxide or cerium oxyhydroxide.
ICP measurement of the amount of the cerium compound adhered showed a value of 0.06% by mass in terms of cerium element relative to lithium nickel-cobalt-manganese oxide. In addition, measurement of a BET value of the resultant positive electrode active material showed a value of 0.68 m$^2$/g.
The thus-formed battery is referred to as "battery Z2" hereinafter.

(Experiment)

Each of the batteries A1 to A4, Z1, and Z2 was charged and discharged in 300 cycles under conditions described below to measure a mean operating voltage after 300 cycles, a capacity retention rate after 300 cycles represented by formula (1) below, and a reduction in mean operating voltage represented by formula (2) below. The results are shown in Table 1.

·Charge condition

Constant-current charge with a current of 800 mA (1.0lt) was performed until the battery voltage was 4.2 V, and further constant-voltage charge with a constant voltage of 4.2 V was performed until a current value was 40 mA ([1/20]lt).

·Discharge condition

Constant-current discharge with a constant current of 800 mA (1.0lt) was performed until the battery voltage was 2.75 V.

·Resting

A rest interval between the charge and discharge was 10 minutes.
```
    Capacity retention rate after 300 cycles (%) =

(discharge capacity after 300 cycles/initial discharge

capacity) × 100 ... (1)


    Reduction in means operating voltage (mV) = mean

operating voltage at initial discharge - mean operating voltage at discharge after 300 cycles ... (2)
```

[Table 1]

| Battery | Positive-electrode active material | Adhered element | | Negative electrode active material | Mean operating voltage after 300 cycles (V) | Capacity retention rate after 300 cycles (%) | Reduction in mean operating voltage (mV) |
|---|---|---|---|---|---|---|---|
| | | Type | Amount of adhering (% by mass) | | | | |
| A1 | $Li_{1.04}Ni_{0.32}CO_{0.32}Mn_{0.32}O_2$ | Er | 0.06 | Graphite | 3.58 | 86.8 | -6 |
| A2 | | | 0.20 | | 3.56 | 87.3 | -3 |
| A3 | | Nd | 0.06 | | 3.55 | 85.2 | 11 |
| A4 | | Pr | 0.06 | | 3.54 | 85.1 | 19 |
| Z1 | | No | - | | 3.37 | 82.3 | 205 |
| Z2 | | Ce | 0.06 | | 3.46 | 83.3 | 103 |

Table 1 indicates that the batteries A1 to A4 each using the positive electrode active material including an oxyhydroxide or hydroxide of a rare earth element with atomic number 59 to 71, such as erbium, neodymium, praseodymium, or the like, adhered to a portion of a surface of the lithium nickel-cobalt-manganese oxide have excellent cycling characteristics (a high mean operating voltage after 300 cycles, a high capacity retention rate after 300 cycles, and no reduction or slight reduction in mean operating voltage) as compared with the battery Z1 including no rare earth element oxyhydroxide or hydroxide adhered and the battery Z2 including an oxyhydroxide or hydroxide of cerium with atomic number 58 adhered.

This is considered to be because when an oxyhydroxide or hydroxide of a rare earth element with atomic number 59 to 71, such as erbium, neodymium, praseodymium, or the like, is adhered to a portion of a surface of the lithium nickel cobalt manganese oxide, an increase in interface resistance on the surface of the positive electrode active material is suppressed (stability of the crystal structure of the surface of the positive electrode active material is improved) even in repeated charge-discharge cycles. An oxyhydroxide and hydroxide of cerium which is a rare earth element with atomic number 58 are not stably present and thus have substantially no effect of improving cycling characteristics.

[SECOND EXAMPLE]

In this example, the effect of improving cycling characteristics was examined by using different types of lithium nickel cobalt manganese oxide and changing the amount of an erbium compound adhered to a portion of a surface of lithium nickel-cobalt-manganese oxide.

(EXAMPLE 1)

A battery was formed by the same method as in Example 1 of the above-described first example except that a positive electrode active material was prepared as described below.
The thus-formed battery is referred to as "battery B1" hereinafter.
$Li_2CO_3$ and a coprecipitated hydroxide represented by $Ni_{0.5}Co_{0.2}Mn_{0.3}(OH)_2$ were mixed using a Ishikawa-type kneading mortar so that a molar ratio of Li to the entire transition metals was 1.08:1. Next, the resultant mixture was heat-treated at 950°C for 20 hours in an air atmosphere and then ground to produce lithium nickel-cobalt-manganese oxide represented by $Li_{1.04}Ni_{0.48}Co_{0.19}Mn_{0.29}O_2$ and having an average secondary particle diameter of about 12 $\mu$m. Then, an erbium compound was adhered to a portion of a surface of $Li_{1.04}Ni_{0.48}Co_{0.19}Mn_{0.29}O_2$ according to the same procedures as those for forming the positive electrode active material in Example 1 of the above-described first example. The amount of the erbium compound adhered was 0.20% by mass in terms of erbium element relative to lithium nickel-cobalt-manganese oxide. Measurement of a BET value of the positive electrode active material showed a value of 0.87 $m^2$/g.

(EXAMPLE 2)

A battery was formed by the same method as in Example 1 of the second example except that the amount of erbium compound adhered was 0.50% by mass in terms of erbium element relative to lithium nickel-cobalt-manganese oxide. Measurement of a BET value of the resultant positive electrode active material showed a value of 1.09 m$^2$/g. The thus-formed battery s referred to as "battery B2" hereinafter.

(EXAMPLE 3)

A battery was formed by the same method as in Example 1 of the second example except that the amount of erbium compound adhered was 0.68% by mass in terms of erbium element relative to lithium nickel-cobalt-manganese oxide. Measurement of a BET value of the resultant positive electrode active material showed a value of 1.30 m$^2$/g. The thus-formed battery is referred to as "battery B3" hereinafter.

(COMPARATIVE EXAMPLE)

A battery was formed by the same method as in Example 1 of the second example except that lithium nickel-cobalt-manganese oxide without an erbium compound adhered to a portion of a surface thereof was used. Measurement of a BET value of the resultant positive electrode active material showed a value of 0.19 m$^2$/g. The thus-formed battery formed is referred to as "battery Y" hereinafter.

(Experiment)

Each of the batteries B1 to B3 and Y was charged and discharged under the same conditions as in the experiment of the above-described first example to measure cycling characteristics (a mean operating voltage after 300 cycles, a capacity retention rate after 300 cycles, and a reduction in mean operating voltage). The results are shown in Table 2.
[Table 2]

| Battery | Positive-electrode active material | Adhered element | | Negative electrode active material | Mean operating voltage after 300 cycles (V) | Capacity retention rate after 300 cycles (%) | Reduction in mean operating voltage (mV) |
|---|---|---|---|---|---|---|---|
| | | Type | Amount of adhering (% by mass) | | | | |
| B1 | $Li_{1.04}Ni_{0.48}Co_{0.19}Mn_{0.29}O_2$ | Er | 0.20 | Graphite | 3.55 | 85.3 | -7 |
| B2 | | | 0.50 | | 3.54 | 86.0 | 13 |
| B3 | | | 0.68 | | 3.52 | 84.0 | 44 |
| Y | | No | - | | 3.48 | 83.5 | 105 |

Table 2 indicates that even when $Li_{1.04}Ni_{0.48}Co_{0.19}Mn_{0.29}O_2$ is used as lithium nickel cobalt manganese oxide, the batteries B1 to B3 each using the positive electrode active material including an oxyhydroxide or hydroxide of the erbium compound adhered to a portion of a surface of the lithium nickel-cobalt-manganese oxide have excellent cycling characteristics (a high mean operating voltage after 300 cycles, a high capacity retention rate after 300 cycles, and no reduction or slight reduction in mean operating voltage) as compared with the battery Y without the erbium compound adhered.
It is also found that the batteries B1 and B2 each containing the erbium compound adhered in an amount of 0.50% by mass or less in terms of erbium element relative to the lithium nickel cobalt manganese oxide have more excellent cycling characteristics than the battery B3 having an amount of adhering of 0.68% by mass. Therefore, the amount of erbium compound adhered is particularly preferably 0.01% by mass or more and 0.50% by mass or less in terms of erbium element relative to the lithium nickel cobalt manganese oxide. The reason for limiting the amount of erbium compound adhered to 0.01% by mass or more is that with a small amount of adhering, the coated area of the surface of lithium nickel cobalt manganese oxide is excessively small, and thus the coating effect cannot be sufficiently exhibited. The same optimum range of the amount of adhering is considered to apply to use of compounds other than the erbium compound (hydroxides and oxyhydroxides of rare earth elements with atomic numbers 59 to 67 and 69 to 71, such as neodymium hydroxide, neodymium oxyhydroxide, praseodymium hydroxide, praseodymium oxyhydroxide, and the like [these may be referred to as "compounds of rare earth elements other than erbium element" hereinafter]).

[THIRD EXAMPLE]

In this example, examination was made as to whether or not the effect of improving cycling characteristics was exhibited even by using lithium nickel-cobalt-manganese oxide having a high ratio of nickel to manganese.

(EXAMPLE)

A battery was formed by the same method as in Example 1 of the above-described first example except that a positive electrode active material was prepared as described below.
The thus-formed battery is referred to as "battery C" hereinafter.

$Li_2CO_3$ and a coprecipitated hydroxide represented by $Ni_{0.7}Co_{0.2}Mn_{0.1}(OH)_2$ were mixed using a Ishikawa-type kneading mortar so that a molar ratio of Li to the entire transition metals was 1.08:1. Next, the resultant mixture was heat-treated at 950°C for 20 hours in an air atmosphere and then ground to produce lithium nickel-cobalt-manganese oxide represented by $Li_{1.04}Ni_{0.67}Co_{0.19}Mn_{0.10}O_2$ and having an average secondary particle diameter of about 12 $\mu$m. Then, an erbium compound was adhered to a portion of a surface of $Li_{1.04}Ni_{0.67}Co_{0.19}Mn_{0.10}O_2$ according to the same procedures as those for forming the positive electrode active material in Example 1 of the above-described first example. The amount of the erbium compound adhered was 0.20% by mass in terms of erbium element relative to lithium nickel-cobalt-manganese oxide.

(COMPARATIVE EXAMPLE)

A battery was formed by the same method as in the example of the third example except that $Li_{1.04}Ni_{0.67}Co_{0.19}Mn_{0.10}O_2$ without an erbium compound adhered to a portion of a surface thereof was used.
The thus-formed battery is referred to as "battery X" hereinafter.

(Experiment)

Each of the batteries C and X was charged and discharged under conditions described below to measure cycling characteristics (a mean operating voltage after 300 cycles, a capacity retention rate after 300 cycles, and a reduction in mean operating voltage). The results are shown in Table 3.

·Charge condition

Constant-current charge with a current of 800 mA (1.0lt) was performed until the battery voltage was 4.15 V, and further constant-voltage charge with a constant voltage of 4.15 V was performed until a current value was 40 mA ([1/20]lt).

·Discharge condition

Constant-current discharge with a constant current of 800 mA (1.0lt) was performed until the battery voltage was 2.75 V.

·Resting

A rest interval between the charging and discharging was 10 minutes.
[Table 3]

| Battery | Positive-electrode active material | Adhered element | | Negative electrode active material | Mean operating voltage after 300 cycles (V) | Capacity retention rate after 300 cycles (%) | Reduction in mean operating voltage (mV) |
|---|---|---|---|---|---|---|---|
| | | Type | Amount of adhering (% by mass) | | | | |
| C | $Li_{1.04}Ni_{0.67}Co_{0.19}Mn_{0.10}O_2$ | Er | 0.20 | Graphite | 3.56 | 87.7 | -1 |
| X | | No | 0 | | 3.54 | 87.4 | 12 |

Table 3 indicates that even when lithium nickel cobalt manganese oxide ($Li_{1.04}Ni_{0.67}Co_{0.19}Mn_{0.10}O_2$) having a high ratio (6.7) of nickel to manganese is used, the battery C containing erbium adhered to a portion of a surface of the lithium nickel cobalt manganese oxide has excellent cycling characteristics (a high mean operating voltage after 300 cycles, high capacity retention rate after 300 cycles, and no reduction in mean operating voltage) as compared with the battery X without the erbium compound adhered to a portion of the surface. This is considered to be due to the fact that as shown in the experiment in the first example, stability of the crystal structure in the surface of the positive electrode active material is improved by adhering the erbium compound to a portion of the surface.

Even when a compound of a rare earth element other than erbium element is adhered to a portion of a surface of lithium nickel cobalt manganese oxide having a high ratio of nickel to manganese, the same effect is considered to be achieved.

In addition, not only when lithium nickel cobalt manganese oxide ($Li_{1.04}Ni_{0.32}Co_{0.32}Mn_{0.32}O_2$, having a ratio of nickel to manganese of 1.0) used in Example 1 of the first example is used but also when lithium nickel cobalt manganese oxide ($Li_{1.04}Ni_{0.67}Co_{0.19}Mn_{0.10}O_2$, having a ratio of nickel to manganese of 6.7) used in the example of the third example is used, the cycling characteristics are improved by adhering an erbium compound to a portion of the surface. Therefore, it is considered that the same effect can be achieved as long as the nickel/manganese ratio is 1.0 or more and 6.7 or less. Considering the action that stability of the crystal structure in the surface of the positive electrode active material is improved as long as an erbium compound is simply adhered to a portion of the surface, it is considered that the same effect can be achieved at a nickel/manganese ratio of less than 1.0 or exceeding 6.7.

[FOURTH EXAMPLE]

In this example, examination was made as to whether or not the effect of improving cycling characteristics was exhibited even by adding silicon oxide to graphite used as a main negative electrode active material.

(EXAMPLE)

A battery was formed by the same method as in Example 1 of the second example except that a negative electrode was formed as described below.
The thus-formed battery is referred to as "battery D" hereinafter.

A negative electrode active material [a mixture of artificial graphite and silicon oxide represented by $SiO_x$ ($0.5 \leq x \leq 1.6$) having a ratio of silicon oxide of 5% by mass relative to the total amount of the negative electrode active material] and SBR (styrene-butadiene rubber) serving as a binder were added to an aqueous solution of CMC (carboxymethyl cellulose sodium) serving as a thickener dissolved in water so that a ratio of the negative electrode active material, the binder, and the thickener was 98:1:1, and then the resultant mixture was kneaded to prepare negative electrode slurry. Next, the negative electrode slurry was uniformly applied to both surfaces of a negative-electrode current collector composed of a copper foil, dried, and then rolled with a rolling mill, and further a negative-electrode current collector tab was attached, forming a negative electrode containing silicon oxide as the negative electrode active material.

(COMPARATIVE EXAMPLE)

A battery was formed by the same method as in the comparative example of the second example except that the same negative electrode as in the example of the fourth example was used.
The thus-formed battery is referred to as "battery W" hereinafter.

(Experiment)

Each of the batteries D and W was charged and discharged under the same conditions as in the experiment of the first example to measure cycling characteristics (a mean operating voltage after 300 cycles, a capacity retention rate after 300 cycles, and a reduction in mean operating voltage). The results are shown in Table 4.

[Table 4]

| Battery | Positive-electrode active material | Adhered element | | Negative electrode active material | Mean operating voltage after 300 cycles (V) | Capacity retention rate after 300 cycles (%) | Reduction in mean operating voltage (mV) |
|---|---|---|---|---|---|---|---|
| | | Type | Amount of adhering (% by mass) | | | | |
| D | $Li_{1.04}Ni_{0.48}Co_{0.19}Mn_{0.29}O_2$ | Er | 0.20 | Silicon oxide-containing graphite | 3.58 | 80.6 | -12 |
| W | | No | 0 | | 3.57 | 80.0 | 18 |

Table 4 indicates that even when silicon oxide-containing graphite is used as the negative electrode active material, the battery D using the positive electrode active material containing the erbium compound adhered to a portion of a surface of lithium nickel-cobalt-manganese oxide has excellent cycling characteristics (a high mean operating voltage after 300 cycles, a high capacity retention rate after 300 cycles, and no reduction in mean operating voltage) as compared with the battery W without the erbium compound adhered to a portion of a surface of lithium nickel-cobalt-manganese oxide. Therefore, not only graphite but also silicon oxide-containing graphite or the like used as the negative electrode active material can improve the cycling characteristics.

It is considered that even when a compound of a rare earth element other than erbium element is adhered to a portion of a surface of lithium nickel cobalt manganese oxide, the same effect can be achieved.

[FIFTH EXAMPLE]

In this example, what positive electrode active material was used to exhibit the effect of improving an initial charge-discharge efficiency was examined.

(EXAMPLE)

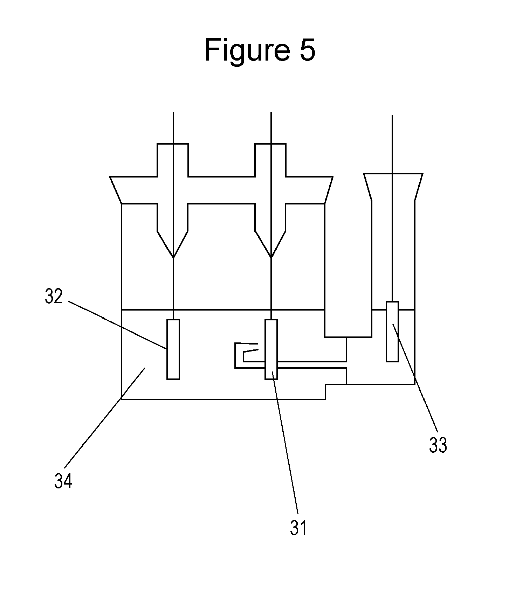

In this example, a three-electrode beaker cell shown in Figure 5 was formed. Specifically, the positive electrode (containing the erbium compound adhered in an amount of 0.07% by mass in terms of erbium element relative to lithium nickel-cobalt-manganese oxide) prepared by the same method as in Example 1 of the first example was used as a working electrode 31. A lithium metal was used as a counter electrode 32 and a reference electrode 33, and a solution prepared by adding $LiPF_6$ at a ratio of 1 mol/liter to a mixed solvent containing EC and EMC at a volume ratio of 3:7 was used as an electrolyte 34.

The thus-formed three-electrode beaker cell is referred to as "cell E" hereinafter.

(COMPARATIVE EXAMPLE 1)

A three-electrode beaker cell was formed by the same method as in the example of the fifth example except that lithium nickel-cobalt-manganese oxide without an erbium compound adhered to a portion of a surface thereof was used.

The thus-formed three-electrode beaker cell is referred to as "cell V1" hereinafter.

(COMPARATIVE EXAMPLE 2)

A three-electrode beaker cell was formed by the same method as in the example of the fifth example except that a positive electrode active material was prepared as described below.

The thus-formed three-electrode beaker cell is referred to as "cell V2" hereinafter.

$Li_2CO_3$ and an oxide represented by $Co_3O_4$ were mixed using an Ishikawa-type kneading mortar so that a molar ratio of Li to the entire transition metals was 1:1. Next, the resultant mixture was heat-treated at 950°C for 20 hours in an air atmosphere and then ground to produce lithium cobalt oxide represented by $LiCoO_2$ and having an average secondary particle diameter of about 12 $\mu$m. Then, an erbium compound was adhered to a portion of a surface of $LiCoO_2$ according to the same procedures as those for forming the positive electrode active material in Example 1 of the above-described first example. The amount of the erbium compound adhered was 0.07% by mass in terms of erbium element relative to lithium cobalt oxide.

(COMPARATIVE EXAMPLE 3)

A three-electrode beaker cell was formed by the same method as in Comparative Example 2 of the fifth example except that lithium cobalt oxide without an erbium compound adhered to a portion of a surface thereof was used as a positive electrode active material.
The thus-formed three-electrode beaker cell is referred to as "cell V3" hereinafter.

(Experiment)

The positive electrode active material used in each of the cells V1 to V3 was examined by charge and discharge under conditions described below to measure an initial discharge specific capacity, and further an initial charge-discharge efficiency was calculated from formula (3) below. The results are shown in Table 5.
Each of the cells was charged to 4.3 V (vs. Li/Li$^+$) with a current density of 0.75 mA/cm$^2$ and then further charged to 4.3 V (vs. Li/Li$^+$) with a current density of 0.08 mA/cm$^2$ to measure an initial charge specific capacity (mAh/g) of the positive electrode active material. Next, the cell was discharged to 2.75 V (vs. Li/Li$^+$) with a current density of 0.75 mA/cm$^2$ to determine an initial discharge specific capacity (mAh/g) of the positive electrode active material. By using the thus-determined initial charge specific capacity and initial discharge specific capacity, an initial charge-discharge efficiency was determined according to the formula (3) below.
$$\text{Initial charge-discharge efficiency} = (\text{initial}$$
$$\text{discharge specific capacity/initial charge specific}$$
$$\text{capacity}) \times 100 \ (\%) \ \ldots \ (3)$$

[Table 5]

| Cell | Positive-electrode active material | Adhered element | | Initial discharge specific capacity (mAh/g) | Initial charge-discharge efficiency (%) |
|---|---|---|---|---|---|
| | | Type | Amount of adhering (% by mass) | | |
| E | Li$_{1.04}$Ni$_{0.32}$Co$_{0.32}$Mn$_{0.32}$O$_2$ | Er | 0.07 | 156.6 | 90.0 |
| V1 | | No | - | 154.2 | 88.6 |
| V2 | LiCoO$_2$ | Er | 0.07 | 152.9 | 93.8 |
| V3 | | No | - | 153.0 | 93.9 |

Table 5 indicates that the cell E using the positive electrode active material containing the erbium compound adhered to a portion of a surface of lithium nickel-cobalt-manganese oxide is improved in both initial discharge specific capacity and initial charge-discharge efficiency as compared with the cell V1 using the positive electrode active material without the erbium compound adhered to a portion of a surface of lithium nickel-cobalt-manganese oxide.
On the other hand, it is found that the cell V2 using the positive electrode active material containing the erbium compound adhered to a portion of a surface of lithium cobalt oxide is not improved in initial discharge specific capacity and initial charge-discharge efficiency as compared with the cell V3 using the positive electrode active material without the erbium compound adhered to a portion of a surface of lithium cobalt oxide.
The above reveals that the effect of improving discharge characteristics of the positive electrode active material is peculiar to a lithium transition metal composite oxide containing lithium, nickel, and manganese and having a layered structure.
A conceivable reason for the above-described results is as described below. That is, during initial charge, the lithium nickel-cobalt-manganese oxide containing lithium, nickel, and manganese and having a layered structure produces deterioration in a surface layer in the surface of the positive electrode active material starting from decomposition reaction of the electrolyte, thereby significantly decreasing the initial charge-discharge efficiency. Therefore, when a compound of a rare earth element such as erbium is adhered to a portion of the surface of the lithium nickel-cobalt-manganese oxide, deterioration in the surface layer is suppressed, and thus a decrease in initial charge-discharge efficiency is suppressed.

[SIXTH EXAMPLE]

In this example, examination was made as to whether or not the effect of improving an initial charge-discharge efficiency was exhibited even by using lithium nickel-cobalt-manganese oxide having a high nickel/cobalt ratio.

(EXAMPLE 1)

A three-electrode beaker cell was formed by the same method as in the example of the fifth example except that the same positive electrode active material as in the example of the third example (the positive electrode active material containing an erbium compound adhered to a portion of a surface of lithium nickel-cobalt-manganese oxide represented by $Li_{1.04}Ni_{0.67}Co_{0.19}Mn_{0.10}O_2$) was used. The amount of erbium compound adhered was 0.20% by mass in terms of erbium element relative to the lithium nickel-cobalt-manganese oxide.
The thus-formed three-electrode beaker cell is referred to as "cell F1" hereinafter.

(COMPARATIVE EXAMPLE 1)

A three-electrode beaker cell was formed by the same method as in the example of the sixth example except that $Li_{1.04}Ni_{0.67}Co_{0.19}Mn_{0.10}O_2$ without an erbium compound adhered to a portion of a surface thereof was used as a positive electrode active material.
The thus-formed three-electrode beaker cell is referred to as "cell U1" hereinafter.

(EXAMPLE 2)

A three-electrode beaker cell was formed by the same method as in the example of the fifth example except that a positive electrode active material was prepared as described below.
The thus-formed three-electrode beaker cell is referred to as "cell F2" hereinafter.
$Li_2CO_3$ and a coprecipitated hydroxide represented by $Ni_{0.7}Co_{0.1}Mn_{0.2}(OH)_2$ were mixed using a Ishikawa-type kneading mortar so that a molar ratio of Li to the entire transition metals was 1.08:1. Next, the resultant mixture was heat-treated at 950°C for 20 hours in an air atmosphere and then ground to produce lithium nickel-cobalt-manganese oxide represented by $Li_{1.04}Ni_{0.67}Co_{0.10}Mn_{0.19}O_2$ and having an average secondary particle diameter of about 12 μm. Then, an erbium compound was adhered to a portion of a surface of $Li_{1.04}Ni_{0.67}Co_{0.10}Mn_{0.19}O_2$ according to the same procedures as those for forming the positive electrode active material in Example 1 of the first example. The amount of the erbium compound adhered was 0.20% by mass in terms of erbium element relative to the lithium nickel-cobalt-manganese oxide.

(COMPARATIVE EXAMPLE 2)

A three-electrode beaker cell was formed by the same method as in Example 2 of the sixth example except that $Li_{1.04}Ni_{0.67}Co_{0.10}Mn_{0.19}O_2$ without an erbium compound adhered to a portion of a surface thereof was used as a positive electrode active material.
The thus-formed three-electrode beaker cell is referred to as "cell U2" hereinafter.

(EXAMPLE 3)

A three-electrode beaker cell was formed by the same method as in the example of the fifth example except that the same positive electrode active material as in Example 1 of the second example (the positive electrode active material containing an erbium compound adhered to a portion of a surface of lithium nickel-cobalt-manganese oxide represented by $Li_{1.04}Ni_{0.48}Co_{0.19}Mn_{0.29}O_2$) was used. The amount of erbium compound adhered was 0.20% by mass in terms of erbium element relative to the lithium nickel-cobalt-manganese oxide.
The thus-formed three-electrode beaker cell is referred to as "cell F3" hereinafter.

(COMPARATIVE EXAMPLE 3)

A three-electrode beaker cell was formed by the same method as in Example 3 of the sixth example except that $Li_{1.04}Ni_{0.48}Co_{0.19}Mn_{0.29}O_2$ without an erbium compound adhered to a portion of a surface thereof was used as a positive electrode active material.

The thus-formed three-electrode beaker cell is referred to as "cell U3" hereinafter.

(Experiment)

The positive electrode active material used in each of the cells F1 to F3 and U1 to U3 was examined by the same experiment as in the fifth example to measure an initial discharge specific capacity and an initial charge-discharge efficiency. The results are shown in Table 6.

[Table 6]

| Cell | Positive-electrode active material | Adhered element | | Initial discharge specific capacity (mAh/g) | Initial charge-discharge efficiency (%) |
|---|---|---|---|---|---|
| | | Type | Amount of adhering (% by mass) | | |
| F1 | $Li_{1.04}Ni_{0.67}Co_{0.19}Mn_{0.10}O_2$ | Er | 0.20 | 183.9 | 89.6 |
| U1 | | No | - | 183.7 | 89.1 |
| F2 | $Li_{1.04}Ni_{0.67}Co_{0.10}Mn_{0.19}O_2$ | Er | 0.20 | 179.3 | 86.5 |
| U2 | | No | - | 179.0 | 85.7 |
| F3 | $Li_{1.04}Ni_{0.48}C_{0.19}Mn_{0.29}O_2$ | Er | 0.20 | 168.3 | 89.4 |
| U3 | | No | - | 165.3 | 88.6 |

Table 6 indicates that the cells F1 to F3 each using the positive electrode active material containing the erbium compound adhered to a portion of a surface of lithium nickel-cobalt-manganese oxide are improved in both initial discharge specific capacity and initial charge-discharge efficiency as compared with the cells U1 to U3 each using the positive electrode active material without the erbium compound adhered to a portion of a surface of lithium nickel-cobalt-manganese oxide. Therefore, even when lithium nickel-cobalt-manganese oxide having a high nickel/manganese ratio is used, the effect of improving a decrease in initial charge-discharge efficiency is exhibited. A possible reason for this is the same as described in the experiment of the fifth example.

Since the effect of suppressing a decrease in initial charge-discharge efficiency is due to an improvement in stability of the crystal structure of the surface of the positive electrode active material, the same effect is considered to be achieved even by adhering a compound of a rare earth element other than erbium element to a portion of a surface of lithium nickel-cobalt-manganese oxide having a high nickel/manganese ratio.

In addition, the cell F1 having a high initial charge-discharge efficiency uses the same positive electrode active material as the battery C exhibiting excellent cycling characteristics, the cell F3 having a high initial charge-discharge efficiency uses the same positive electrode active material as the battery B1 exhibiting excellent cycling characteristics, and the cell E having a high initial charge-discharge efficiency shown in the fifth example uses substantially the same positive electrode active material (slightly different only in amount of the erbium compound adhered) as the battery A1 exhibiting excellent cycling characteristics. Therefore, it is generally considered that when a positive electrode active material having a high initial charge-discharge efficiency is used, the effect of improving cycling characteristics is also exhibited. Thus, it is considered that a battery using the same positive electrode active material as the cell F2 having a high initial charge-discharge efficiency is also improved in cycling characteristics.

Further, the positive electrode active material used in the example of the fifth example and in this example has an initial charge-discharge efficiency of 90% or less. On the other hand, graphite has an initial charge-discharge efficiency (initial charge-discharge efficiency when formed into a three-electrode cell) of about 93%. Therefore, when the initial charge-discharge efficiency of the negative electrode is higher than that of the positive electrode (i.e., when the initial charge-discharge efficiency of a battery is controlled by the initial charge-discharge efficiency of the positive electrode), the initial charge-discharge efficiency of a battery can be enhanced by improving the initial charge-discharge efficiency of the positive electrode, resulting in an increase in capacity of the battery. That is, when the initial charge-discharge efficiency of the negative electrode is lower than that of the positive electrode (i.e., when the initial charge-discharge efficiency of a battery is determined by the initial charge-discharge efficiency of the negative electrode), the capacity of a battery cannot be enhanced by improving the initial charge-discharge efficiency of the positive electrode.

Specifically, when Si, a Si alloy, tin, or the like, which may cause a lower initial charge-discharge efficiency than that of a lithium transition metal composite oxide containing lithium, nickel, and manganese and having a layered structure, is used singly or as a main component of a negative electrode, the initial charge-discharge efficiency of the negative electrode may be lower than that of a positive electrode. Therefore, in this case, the capacity of a battery may not be enhanced even by improving the initial charge-discharge efficiency of the positive electrode.

In contrast, when a graphite negative electrode, a mixture of graphite and Si, a mixture of graphite and a Si alloy, or the like is used, the initial charge-discharge efficiency of the negative electrode is frequently higher than that of a positive electrode. Therefore, the capacity of a battery can be enhanced by improving the initial charge-discharge efficiency of the positive electrode. However, when a negative electrode active material mixed with Si or a Si alloy is used, it is necessary to regulate a ratio of Si or a Si alloy so that the initial charge-discharge efficiency of the negative electrode is not lower than that of the positive electrode. Specifically, when Si or a Si alloy is mixed, the ratio of Si or a Si alloy is preferably regulated to 20% by mass or less relative to the total amount of the negative electrode active material. When Si or a Si alloy is mixed, cycling characteristics may be degraded by stress due to expansion and contraction of the negative electrode during charge and discharge. Also in view of this point, the ratio of Si or a Si alloy is preferably regulated as described above.

The case where the effect of improving the initial charge-discharge efficiency is exhibited is not limited to the case where the initial charge-discharge efficiency of the negative electrode is higher than that of the positive electrode in a state in which an erbium compound or the like is adhered to a portion of a surface of a lithium transition metal composite oxide. That is, the present invention can be also applied to a case where when an erbium compound or the like is not adhered to a portion of a surface of a lithium transition metal composite oxide, the initial charge-discharge efficiency of the negative electrode is higher than that of the positive electrode, while when an erbium compound or the like is adhered to a portion of a surface of a lithium transition metal composite oxide, the initial charge-discharge efficiency of the negative electrode is lower than that of the positive electrode. However, when an erbium compound or the like is adhered to a portion of a surface of a lithium transition metal composite oxide, the initial charge-discharge efficiency of the negative electrode is preferably higher than that of the positive electrode.

[SEVENTH EXAMPLE]

In this example, examination was made as to whether or not the effect of improving cycling characteristics was exhibited when the same treatment as described above was performed without adding an aqueous solution of a rare earth element in the step of forming a positive electrode.

(COMPARATIVE EXAMPLE)

A battery was formed by the same method as in Example 1 of the second example except that in place of the aqueous solution of erbium nitrate pentahydrate, the same amount of pure water was used in the step of surface treatment of a lithium transition metal composite oxide ($Li_{1.04}Ni_{0.48}Co_{0.19}Mn_{0.29}O_2$) (in Example 1 of the second example, the step of adhering an erbium compound to a portion of a surface of the lithium transition metal composite oxide).
The thus-formed battery is referred to as "battery T" hereinafter.

(Experiment)

The battery T was charged and discharged under the same conditions as in the experiment of the first example to measure cycling characteristics (a mean operating voltage after 300 cycles, a capacity retention rate after 300 cycles, and a reduction in mean operating voltage). The results are shown in Table 7. Table 7 also shows the results of the battery B1 and the battery Y.

[Table 7]

| Battery | Positive-electrode active material | Surface treatment step | Adhered element | | Mean operating voltage (after 300 cycles) | Capacity retention rate (after 300 cycles) | Reduction in mean operating voltage (mV) |
|---|---|---|---|---|---|---|---|
| | | | Type | Amount of adhering (% by mass) | | | |
| B1 | | Yes | Er | 0.20 | 3.55 | 85.3 | -7 |
| T | $Li_{1.04}Ni_{0.48}Co_{0.19}Mn_{0.29}O_2$ | Yes | No | 0.00 | 3.04 | 22.1 | 529 |

(continued)

| Battery | Positive-electrode active material | Surface treatment step | Adhered element | | Mean operating voltage (after 300 cycles) | Capacity retention rate (after 300 cycles) | Reduction in mean operating voltage (mV) |
|---|---|---|---|---|---|---|---|
| | | | Type | Amount of adhering (% by mass) | | | |
| Y | | No | No | 0.00 | 3.48 | 83.5 | 105 |

Table 7 indicates that the battery T formed by adding dropwise pure water in the surface treatment step shows significant deterioration in cycling characteristics as compared with not only the battery B1 formed by adding dropwise an aqueous solution of erbium nitride pentahydrate in the surface treatment step but also the battery Y not subjected to the surface treatment step. This is because when the surface treatment step is performed with only pure water as in the battery T, the surface area of lithium nickel-cobalt-manganese oxide is increased, and thus a reaction of the electrolyte extremely easily takes place in the surface of lithium nickel-cobalt-manganese oxide. In contrast, in the battery Y not subjected to the surface treatment step, the surface area of lithium nickel-cobalt-manganese oxide is not increased, and thus a reaction of the electrolyte in the surface of lithium nickel-cobalt-manganese oxide more slowly proceeds than in the battery T. In addition, when the surface treatment step is performed with an aqueous solution of erbium nitrate pentahydrate as in the battery B1, the surface area of lithium nickel-cobalt-manganese oxide is increased, but reaction of the electrolyte hardly occurs in the surface of lithium nickel-cobalt-manganese oxide because the erbium compound is adhered to a portion of the surface of lithium nickel-cobalt-manganese oxide.

Therefore, it is considered that the effect of the present invention is exhibited through the step of adhering erbium to a portion of a surface of lithium nickel-cobalt-manganese oxide in the surface treatment step. That is, it is considered that the effect of improving cycling characteristics is exhibited by adhering erbium to a portion of a surface of lithium nickel-cobalt-manganese oxide.

Industrial Applicability

The present invention can be expected for development of driving power supplies for mobile information terminals, for example, cellular phones, notebook-size personal computers, PDAs, and the like, driving power supplies for high output, for example, HEVs and electric tools, and further storage battery apparatuses combined with solar cells or electric power systems.

Reference Signs List

1: positive electrode
2: negative electrode
3: separator
4: positive-electrode current collector tab
5: negative-electrode current collector tab
6: aluminum laminate outer case
21: particle of lithium transition metal composite oxide
22: particle of rare earth element compound (erbium oxyhydroxide or the like)
31: working electrode
32: counter electrode (lithium metal)
33: reference electrode (lithium metal)
34: electrolyte

**Claims**

1. A positive electrode active material for a nonaqueous electrolyte secondary battery, the positive electrode active material comprising:

a lithium transition metal composite oxide containing lithium, nickel, and manganese and having a layered structure; and

an oxyhydroxide of at least one element selected from the rare earth elements with atomic numbers 59 to 71 and/or a hydroxide of at least one element selected from the rare earth elements with atomic numbers 59 to 71, the oxyhydroxide and/or the hydroxide being adhered to a portion of a surface of the lithium transition metal composite oxide.

2. The positive electrode active material for a nonaqueous secondary battery according to Claim 1, wherein the rare earth elements with atomic numbers 59 to 71 include at least one selected from the group consisting of praseodymium, neodymium, and erbium.

3. The positive electrode active material for a nonaqueous secondary battery according to Claim 1 or 2, wherein the lithium transition metal composite oxide containing lithium, nickel, and manganese and having a layered structure is represented by a chemical formula, $Li_{1+x}(Ni_aMn_bCo_c)O_2$ ($x + a + b + c = 1$, $0 < x \leq 0.1$, $0 \leq c < 0.4$, $0.7 \leq a/b \leq 3$).

4. The positive electrode active material for a nonaqueous secondary battery according to any one of Claims 1 to 3, wherein the lithium transition metal composite oxide containing lithium, nickel, and manganese and having a layered structure is lithium nickel-cobalt-manganese oxide.

5. The positive electrode active material for a nonaqueous secondary battery according to any one of Claims 1 to 4, wherein an amount of adhering of the oxyhydroxide of at least one element selected from the rare earth elements with atomic numbers 59 to 71 and/or the hydroxide of at least one element selected from the rare earth elements with atomic numbers 59 to 71 is 0.005% by mass or more and 0.8% by mass or less in terms of rare earth element relative to the lithium transition metal composite oxide.

6. A positive electrode for a nonaqueous electrolyte secondary battery comprising the positive electrode active material for an nonaqueous electrolyte secondary battery according to any one of Claims 1 to 5.

7. A nonaqueous electrolyte secondary battery comprising:

the positive electrode for a nonaqueous electrolyte secondary battery according to Claim 6;
a negative electrode including, as a negative electrode active material, a graphite material, a lithium metal, a lithium alloy, a lithium-absorbable and desorbable material, or a mixture thereof; and
a nonaqueous electrolyte.

8. The nonaqueous electrolyte secondary battery according to Claim 7, wherein an initial charge-discharge efficiency of the negative electrode is higher than an initial charge-discharge efficiency of the positive electrode.

9. The nonaqueous electrolyte secondary battery according to Claim 7 or 8, wherein when the negative electrode active material contains the graphite material, a ratio of the graphite material is 80% by mass or more relative to the total amount of the negative electrode active material.

# Figure 1

Figure 2

EP 2 667 433 A1

# Figure 3

# Figure 4

# Figure 5

## INTERNATIONAL SEARCH REPORT

| | International application No. |
|---|---|
| | PCT/JP2012/051361 |

### A. CLASSIFICATION OF SUBJECT MATTER
*H01M4/505*(2010.01)i, *H01M4/131*(2010.01)i, *H01M4/36*(2006.01)i, *H01M4/525*(2010.01)i, *H01M10/052*(2010.01)i

According to International Patent Classification (IPC) or to both national classification and IPC

### B. FIELDS SEARCHED

Minimum documentation searched (classification system followed by classification symbols)
H01M4/505, H01M4/131, H01M4/36, H01M4/525, H01M10/052

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2005/008812 A1 (Yuasa Corp.), 27 January 2005 (27.01.2005), entire text; fig. 1 & US 2006/0177739 A1 | 1-9 |
| X | WO 2010/004973 A1 (Sanyo Electric Co., Ltd.), 14 January 2010 (14.01.2010), entire text; fig. 1 to 3 & JP 2010-108899 A     & JP 2010-245016 A & JP 2010-165657 A     & EP 2299524 A1 | 1,2,5-9 |
| Y | | 3,4 |
| Y | JP 2008-186753 A (Hitachi Maxell, Ltd.), 14 August 2008 (14.08.2008), examples 1 to 6 (Family: none) | 3,4 |

☒ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 March, 2012 (01.03.12) | 13 March, 2012 (13.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

### INTERNATIONAL SEARCH REPORT

International application No.

PCT/JP2012/051361

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-13405 A (Tosoh Corp.), 24 January 2008 (24.01.2008), example 1 (Family: none) | 3,4 |
| A | JP 2005-196992 A (Hitachi, Ltd.), 21 July 2005 (21.07.2005), entire text; fig. 1 (Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010004973 A1